# EUROPÄISCHE PATENTSCHRIFT

(11) **EP 3 032 501 B1**
(45) Veröffentlichungstag und Bekanntmachung des Hinweises auf die Patenterteilung: **02.05.2018**
(21) Anmeldenummer: 14197350.3
(22) Anmeldetag: 11.12.2014
(51) Int. Cl.: G07C 9/00

(54) **Verfahren zum Betreiben eines ID-basierten Zugangskontrollsystems**
Method for operating an ID-based access control system
Procédé destiné au fonctionnement d'un système de contrôle d'accès ID

(43) Veröffentlichungstag der Anmeldung: 15.06.2016
(73) Patentinhaber: SKIDATA AG, 5083 Grödig/Salzburg (AT)
(72) Erfinder: Kerschbaumer, Andreas, 9020 Klagenfurt (AT); Kotnik, Harald, 9071 Köttmannsdorf (AT); Novak, Markus, 9624 Egg bei Hermagor (AT)
(74) Vertreter: Karakatsanis, Georgios

(56) Entgegenhaltungen:
- WO-A1-2010/036471
- WO-A1-2014/044307
- WO-A2-2011/141649
- DE-U1-202005 010 960
- US-A1- 2014 136 106

## Beschreibung

Die vorliegende Erfindung bezieht sich auf ein Verfahren zum Betreiben eines ID-basierten Zugangskontrollsystems gemäß dem Oberbegriff des Patentanspruchs 1.

ID-basierte Zugangskontrollsysteme verwenden zur Ermittlung der Gültigkeit einer Zugangskontrollberechtigung die ID eines Kundenmediums, wobei durch Zugangskontrollvorrichtungen des Zugangskontrollsystems die ID des Kundenmediums ausgelesen und an einen zentralen Server übermittelt wird, welcher anhand der ID den Zugang über die die ID übermittelnde Zugangskontrollvorrichtung gewährt oder verweigert. Das Kundenmedium kann beispielsweise als RFID-Tag, RFID-Karte, als Papierticket mit maschinenlesbaren Informationen, oder als elektronisches Ticket mit einem ein- oder zweidimensionalen Barcode ausgeführt sein.

ID-basierte Zugangskontrollsysteme weisen im Gegensatz zu den sogenannten Medium-basierten Zugangskontrollsystemen, bei denen der Zugang ohne die Notwendigkeit einer datentechnischen Verbindung zu einem zentralen Server anhand der auf einem Kundenmedium abgelegten Information gewährt oder verweigert wird, den Vorteil auf, dass eine hohe Flexibilität und Skalierung gewährleistet wird. Der ID eines Kundenmediums können mehrere Arten von Zugangsberechtigungen, beispielsweise für unterschiedliche Bereiche, unterschiedliche Zeiten und unterschiedliche Betreiber zugeordnet werden, was insbesondere bei Skigebieten von Vorteil ist. Dies ist bei Medium-basierten Zugangskontrollsystemen nicht ohne weiteres möglich, da die Speicherkapazität eines Kundenmediums begrenzt ist, so dass Informationen bezüglich mehrerer Zugangsberechtigungen in der Regel nicht abgelegt werden können.

ID-basierte Zugangskontrollsysteme weisen jedoch den Nachteil auf, dass der zentrale Server sowie die Zugangskontrollvorrichtungen des Zugangskontrollsystems über ein Netzwerk zum Zweck der Datenkommunikation miteinander verbunden sein müssen. Wenn eine Zugangskontrollvorrichtung oder der zentrale Server offline sind, entsteht die Notwendigkeit, den Betrieb des Zugangskontrollsystems dennoch aufrecht zu erhalten.

Aus der WO2014/044307A1 geht ein Verfahren zum Betrieb eines Zugangskontrollsystems, insbesondere für den Fall, dass eine Zugangskontrollvorrichtung offline ist, hervor, im Rahmen dessen eine Positiv/Negativ-Liste von einem zentralen Server an die Zugangskontrollvorrichtungen übermittelt und von diesen gespeichert wird, wobei für den Fall, dass eine Zugangskontrollvorrichtung offline ist, anhand der Positiv/Negativ-Liste der Gültigkeitszustand eines Kundenmediums über die ID des Kundenmediums ermittelt wird. Hierbei werden vom zentralen Server nur die Änderungen der Positiv/Negativ-Liste an die Zugangskontrollvorrichtungen übertragen.

Als nachteilig erweist sich hierbei jedoch die Tatsache, dass die Zugangskontrollvorrichtungen über eine hohe Speicherkapazität verfügen müssen, um die Positiv/Negativ-Liste zu speichern. Zudem können diese Listen nicht zum Zweck einer Preiskalkulation in einem offline-Modus herangezogen werden. Die DE 20 2005 010960 U1 offenbart eine Vorrichtung zur ID-basierten Zugangskontrolle mittels einer online-Zugangskontrolleinheit zu einem gesicherten Bereich und mittels einer offline-Zugangskontrolleinheit zu mindestens einem weiteren gesicherten Bereich, dessen Zugang sich innerhalb des ersten gesicherten Bereichs befindet. Durch die online-Zugangskontrolleinheit wird die Identifikationsnummer des ihr zugeführten Datenträgers auf ihre Gültigkeit überprüft und bei einer gültigen Identifikationsnummer auf den Datenträger eine temporäre Zugangsberechtigung geschrieben, die nachfolgend von der offline-Zugangskontrolleinheit lesbar ist und die Freigabe des Zugangs zu dem von ihr kontrollierten Bereich möglich macht.

Der vorliegenden Erfindung liegt die Aufgabe zugrunde, ein Verfahren zum Betreiben eines ID-basierten Zugangskontrollsystems, umfassend zumindest einen zentralen Server und zumindest eine Zugangskontrollvorrichtung anzugeben, durch dessen Durchführung für den Fall, dass eine Zugangskontrollvorrichtung oder ein zentraler Server offline sind, der Betrieb des Zugangskontrollsystems aufrechterhalten bleibt.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zum Betreiben eines ID-basierten Zugangskontrollsystems mit zumindest einer Zone umfassend zumindest einen zentralen Server und zumindest eine mit dem zumindest einen zentralen Server zum Zweck der Datenkommunikation verbindbare Zugangskontrollvorrichtung vorgeschlagen, im Rahmen dessen jeder Zugangskontrollvorrichtung des Zugangskontrollsystems zumindest eine Zone zugeordnet wird, wobei jede Zone eine eineindeutige Zonen-ID aufweist. Die Zonen können räumliche und/oder zeitliche Zonen für das vom Zugangskontrollsystem abgedeckte Gebiet sein. Einer Zugangskontrollvorrichtung können mehrere Zonen zugeordnet sein, wobei einer Zone mehrere Zugangskontrollvorrichtungen zugeordnet sein können.

Beispielsweise kann eine Zone ein Skigebiet oder eine Skipiste, eine weitere Zone ein Parkplatz des Skigebietes und eine dritte Zone eine Wellness-Einrichtung im Skigebiet sein. Für den Fall, dass eine Zone eine zeitliche Zone ist, kann diese für den Fall, dass lediglich eine räumliche Zone vorgesehen ist, einem vorgegebenen Zeitintervall entsprechen. Für den Fall, dass eine Zone eine räumliche und zeitliche Zone ist, kann dies beispielsweise einem vorgegebenen Zeitintervall in einer bestimmten räumlichen Zone entsprechen.

Gemäß der Erfindung wird ein geringe Speicherressourcen erfordernder Datensatz enthaltend zeitliche Gültigkeitsinformationen und/oder für den Fall, dass mehrere Zonen vorgesehen sind, zonenbezogene Gültigkeitsinformationen, die es ermöglichen, die Gültigkeit einer der ID des Kundenmediums zugeordneten Zugangsberechtigung zu ermitteln, auf ein Kundenmedium geschrieben, wenn das Kundenmedium zum ersten Mal hinsichtlich der Gültigkeit einer Zugangsberechtigung in einer Zone von einer dieser Zone zugeordneten online Zugangskontrollvorrichtung, d.h. mit dem zumindest einen zentralen Server zum Zweck der Datenkommunikation verbundene Zugangskontrollvorrichtung erfasst wird.

Dieser Datensatz, im Folgenden offline-Datensatz genannt, wird für den Fall, dass eine Zugangskontrollvorrichtung, der dieselbe Zone zugeordnet ist offline, d.h. mit dem zumindest einen zentralen Server zum Zweck der Datenkommunikation nicht verbunden ist und das Kundenmedium erfasst, von der offline-Zugangskontrollvorrichtung ausgelesen und zur Ermittlung der Gültigkeit einer der ID des Kundenmediums zugeordneten Zugangsberechtigung herangezogen.

Ein offline-Datensatz gemäß der Erfindung kann z.B. lediglich die Zonen-ID der Zone in der das Kundenmedium erfasst worden ist, die Zonen-ID und einen Zeitstempel, der der Erfassungsuhrzeit in dieser Zone entspricht oder die Zonen-ID, einen Zeitstempel und eine zeitliche Gültigkeitsinformation, beispielsweise die Uhrzeit, ab der die Zugangsberechtigung nicht mehr gültig ist oder eine zeitliche Gültigkeitsinformation differenziert nach der Anzahl der Gültigkeitstage etc. enthalten. Wenn das Zugangskontrollsystem lediglich eine Zone aufweist, entfällt die Zonen-ID, wodurch die Größe des offline-Datensatzes reduziert wird. Der offline Datensatz kann auch lediglich die Zonen-ID und eine zeitliche Gültigkeitsinformation enthalten.

Wenn ein Kundenmedium von einer Zugangskontrollvorrichtung in einer Zone erfasst wird, wird, wenn die Zugangskontrollvorrichtung online ist, lediglich die ID des Kundenmediums ausgelesen und an den zentralen Server weitergeleitet. Der zentrale Server antwortet mit der Information, ob für das Kundenmedium eine gültige Zugangsberechtigung für diese Zone vorliegt und für den Fall, dass das Kundenmedium zum ersten Mal hinsichtlich der Gültigkeit einer Zugangsberechtigung in dieser Zone erfasst wird mit einem offline-Datensatz, der von der Zugangskontrollvorrichtung auf das Kundenmedium geschrieben werden soll. Wenn der offline-Datensatz erfolgreich auf das Kundenmedium geschrieben worden ist, wird von der Zugangskontrollvorrichtung eine entsprechende Information an den zentralen Server übermittelt. Wenn das Schreiben des offline Datensatzes nicht erfolgreich war oder wenn die Zugangskontrollvorrichtung während dieses Vorgangs in den offline-Modus übergeht, wird keine Bestätigung geschickt.

Bei Zugangskontrollen desselben Kundenmediums in derselben Zone mittels online-Zugangskontrollvorrichtungen wird bei der Auswertung der Gültigkeit der Zugangsberechtigung anhand der ID des Kundenmediums über den zentralen Server kein offline-Datensatz an die jeweilige Zugangskontrollvorrichtung übermittelt, die auf das Kundenmedium geschrieben werden soll, da ein offline-Datensatz bereits auf das Kundenmedium geschrieben worden ist. Ein weiterer offline-Datensatz wird nur dann über die jeweilige Zugangskontrollvorrichtung übermittelt, wenn das Kundenmedium von einer online-Zugangskontrollvorrichtung in einer anderen Zone erfasst wird, wie oben beschrieben. Hierbei werden die auf dem Kundenmedium bereits vorhandenen Offline-Datensätze für andere Zonen nicht überschrieben.

Wenn eine Zugangskontrollvorrichtung in einer Zone offline ist, werden von der Zugangskontrollvorrichtung die ID des Kundenmediums und der offline-Datensatz ausgelesen. Anhand der zeitlichen Gültigkeitsinformationen und/oder für den Fall, dass mehrere Zonen vorgesehen sind, der zonenbezogene Gültigkeitsinformationen des offline-Datensatzes wird ausgewertet, ob eine gültige Zugangsberechtigung für diese Zone vorliegt.

Dies ist z.B. der Fall, wenn die Zonen-ID, die im offline-Datensatz enthalten sein kann, mit der Zonen-ID der Zugangskontrollvorrichtung übereinstimmt und das Zeitintervall zwischen dem Schreiben des offline-Datensatzes (d.h. einem Zeitstempel) und dem Auslesen des offline-Datensatzes von der offline-Zugangskontrollvorrichtung innerhalb der zeitlichen Gültigkeit der Zugangsberechtigung liegt, die im offline-Datensatz enthalten ist.

Enthält der offline-Datensatz keine zeitliche Gültigkeitsinformation, so wird der Zugang gewährt, wenn das Zeitintervall zwischen dem Schreiben des offline-Datensatzes (d.h. einem Zeitstempel) und dem Auslesen des offline-Datensatzes von der offline-Zugangskontrollvorrichtung eine vorgegebene, konfigurierbare Zeit nicht überschreitet.

Die Zugangskontrollvorrichtung speichert die Daten der offline-Zugangskontrolltransaktion, die an den zentralen Server weitergeleitet werden, sobald sich die Zugangskontrollvorrichtung wieder im online-Modus befindet.

Für den Fall, dass eine Zugangskontrollvorrichtung ein Kundenmedium zum ersten Mal hinsichtlich der Gültigkeit einer Zugangsberechtigung in der Zone, der sie zugeordnet ist, erfasst und offline ist, wird im Rahmen einer ersten Variante des erfindungsgemäßen Verfahrens der Zugang gewährt, wobei die Gültigkeit des Kundenmediums in derselben Zone von einer weiteren Zugangskontrollvorrichtung oder von derselben Zugangskontrollvorrichtung zu einem späteren Zeitpunkt im online-Modus überprüft werden kann, was in Skigebieten in der Regel der Fall ist. Alternativ kann der Zugang verweigert werden, wobei der Nutzer zu einer Kasse gebeten wird, wo ein offline-Datensatz für diese Zone auf das Kundenmedium geschrieben wird.

Ferner kann für den Fall, dass das Kundenmedium direkt in einer Zone gekauft wird, was beispielsweise bei Skigebieten der Fall sein kann, der entsprechende offline-Datensatz, beispielsweise enthaltend die Zonen-ID, falls mehrere Zonen vorhanden sind, und einen Zeitstempel, der der Erfassungsuhrzeit in dieser Zone entspricht und/oder eine zeitliche Gültigkeitsinformation, zum Zeitpunkt des Kaufs des Kundenmediums auf das Kundenmedium geschrieben werden.

Gemäß der Erfindung ist es auch möglich, beim Erwerb einer Zugangsberechtigung für mehrere Zonen, die Offline-Datensätze für jede dieser Zonen auf das Kundenmedium zu schreiben.

Durch die Synchronisierung der Daten der Zugangskontrolltransaktionen sobald die entsprechenden Zugangskontrollvorrichtungen sich wieder in einem online-Modus befinden, wird das sogenannte Clearing, beispielsweise in einem Skigebiet gewährleistet, da dadurch ermittelt werden kann, wie viele Kunden welche Zugangskontrollvorrichtungen bzw. welche Transportmittel im Skigebiet benutzt haben.

Ferner kann gemäß einer Weiterbildung der Erfindung ein auf ein Kundenmedium geschriebener offline-Datensatz zur Ermittlung der zu zahlenden Gebühren von einem Verkaufsautomaten des Zugangskontrollsystems herangezogen werden, wenn sich der Verkaufsautomat in einem offline-Status befindet, d.h. nicht mit dem zentralen Server verbunden ist. Zu diesem Zweck werden von den Verkaufsautomaten des Zugangskontrollsystems die Preise und Tarife gespeichert, so dass anhand der gespeicherten Preise und Tarife und der Daten des offline-Datensatzes der zu zahlende Betrag ermittelt wird.

Vorzugsweise sind die offline-Datensätze verschlüsselt, wobei die Kundenmedien beschreibbar ausgeführt sind.

Die Erfindung wird im Folgenden anhand der beigefügten Figuren beispielhaft näher erläutert. Es zeigen:
- Figur 1:: Ein Sequenzdiagramm zur Veranschaulichung der ersten Erfassung eines Kundenmediums in einer Zone von einer online-Zugangskontrollvorrichtung;
- Figur 2:: Ein Sequenzdiagramm zur Veranschaulichung der Erfassung eines Kundenmediums in einer Zone von einer Zugangskontrollvorrichtung für den Fall, dass auf das Kundenmedium ein offline-Datensatz für diese Zone geschrieben worden ist; und
- Figur 3:: Ein Sequenzdiagramm zur Veranschaulichung der Erfassung eines Kundenmediums enthaltend einen offline-Datensatz von einer offline-Zugangskontrollvorrichtung.

In den beigefügten Figuren ist mit 1 ein Kundenmedium bezeichnet, beispielsweise ein beschreibbarer RFID-Tag, wobei 2 eine Zugangskontrollvorrichtung und 3 ein der Zugangskontrollvorrichtung zugeordnetes Sperrorgan bezeichnet. Die Zugangskontrollvorrichtung 2 ist nach dem Stand der Technik ausgeführt und umfasst für den Fall von als RFID-Tags ausgeführten Kundenmedien 1 eine Antenneneinheit zur Kommunikation mit den Kundenmedien 1. Während einer Interaktion zwischen der Zugangskontrollvorrichtung 2 und einem Kundenmedium 1 können Daten ausgelesen werden sowie Daten auf das Kundenmedium 1 geschrieben werden.

Bei Auslesen einer gültigen Zugangsberechtigung wird das Sperrorgan von einer Sperrstellung in eine Freigabestellung überführt, welche den Durchgang einer Person bzw. eines Fahrzeugs ermöglicht. Bei Zugangskontrollvorrichtungen für Personen kann das Sperrorgan als Drehsperre oder Flap-Gate ausgeführt sein, wobei für den Fall von Zugangskontrollvorrichtungen für Kraftfahrzeuge das Sperrorgan als Schrankenbaum ausgeführt sein kann. Ferner ist in den Figuren ein zentraler Server des Zugangskontrollsystems mit dem Bezugszeichen 4 versehen.

Im normalen Betrieb des Zugangskontrollsystems sind die Zugangskontrollvorrichtungen 2 mit dem zumindest einen zentralen Server 4 zum Zweck der Datenkommunikation, beispielsweise über ein lokales Netzwerk oder über das Internet verbunden.

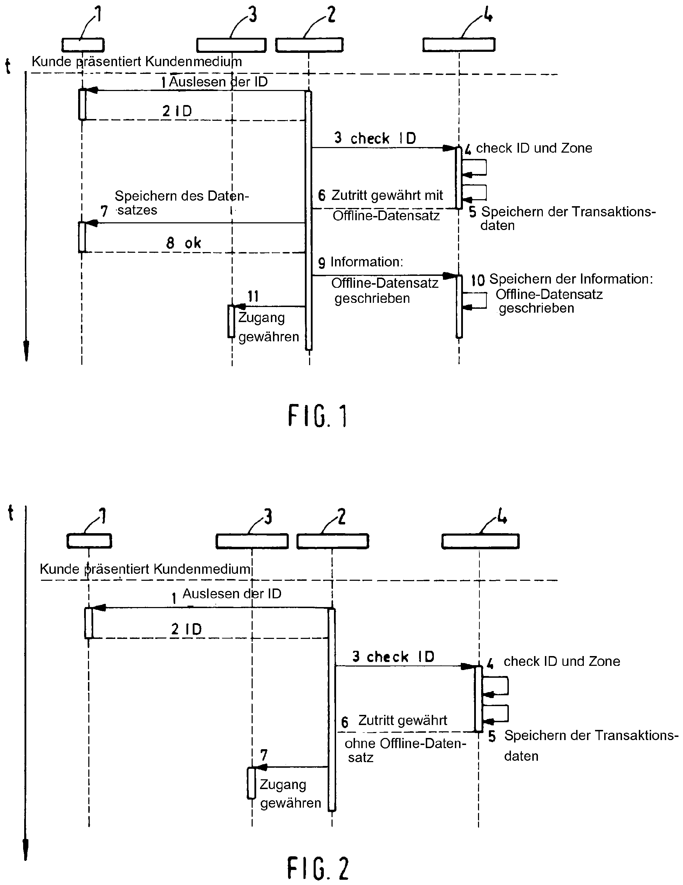

Für den Fall, dass ein Kundenmedium zum ersten Mal hinsichtlich der Gültigkeit der Zugangsberechtigung in einer Zone erfasst wird, wird bezugnehmend auf Figur 1 von einer dieser Zone zugeordneten Zugangskontrollvorrichtung 2 die ID des Kundenmediums 1 ausgelesen (Schritte 1, 2), wobei anschließend die ID des Kundenmediums an den zentralen Server 4 übermittelt wird (Schritt 3), wobei im zentralen Server 4 anhand der ID ermittelt wird, ob eine für diese Zone gültige Zugangsberechtigung vorliegt und ob ein offline-Datensatz auf dieses Kundenmedium 1 geschrieben worden ist (Schritt 4).

In einem nächsten Schritt werden die Transaktionsdaten der Zugangskontrolle gespeichert (Schritt 5) und es werden für den Fall einer gültigen Zugangsberechtigung an die Zugangskontrollvorrichtung 2 die Information, den Zutritt zu gewähren und ein offline-Datensatz, der von der Zugangskontrollvorrichtung 2 auf das Kundenmedium 1 geschrieben werden soll, übermittelt (Schritt 6). Anschließend (Schritt 7) wird von der Zugangskontrollvorrichtung 2 der offline-Datensatz, enthaltend beispielsweise die Zonen-ID, einen Zeitstempel und zeitliche Gültigkeitsinformationen auf das Kundenmedium 1 geschrieben, wobei das erfolgreiche Schreiben des offline-Datensatzes vom Kundenmedium 1 bestätigt wird (Schritt 8). Anschließend wird von der Zugangskontrollvorrichtung 2 an den zentralen Server 4 die Information übermittelt, dass der offline-Datensatz auf das Kundenmedium 1 für diese Zone geschrieben worden ist (Schritt 9), wobei diese Information im zentralen Server 4 gespeichert wird (Schritt 10). Nach dem Erhalt der Information, dass der offline-Datensatz erfolgreich auf das Kundenmedium 1 geschrieben worden ist, wird das Sperrorgan 3 der Zugangskontrollvorrichtung 2 im Öffnungssinne betätigt, um den Zugang zu gewähren (Schritt 11).

Gegenstand der Figur 2 ist die Durchführung des erfindungsgemäßen Verfahrens für den Fall, dass ein Kundenmedium 1 nicht zum ersten Mal hinsichtlich der Gültigkeit der Zugangsberechtigung von einer offline-Zugangskontrollvorrichtung 2 in einer Zone erfasst wird. Hierbei wird mittels einer Interaktion zwischen der Zugangskontrollvorrichtung 2 und dem Kundenmedium 1 die ID des Kundenmediums 2 ausgelesen (Schritte 1, 2), wobei anschließend (Schritt 3) diese Information an den zentralen Server 4 weitergeleitet wird, wo anhand der ID des Kundenmediums ermittelt wird, ob eine gültige Zugangsberechtigung vorliegt und ob ein offline-Datensatz für diese Zone bereits auf das Kundenmedium 1 geschrieben worden ist (Schritt 4). Anschließend werden (Schritt 5) die Transaktionsdaten der Zugangskontrolle gespeichert und, da ein offline-Datensatz für diese Zone auf das Kundenmedium bereits geschrieben ist, die Information "Zugang gewähren" ohne einen offline-Datensatz zu schreiben an die Zugangskontrollvorrichtung 2 übermittelt (Schritt 6). Anschließend wird das Sperrorgan 3 der Zugangskontrollvorrichtung im Öffnungssinne betätigt, um den Zugang zu gewähren (Schritt 7).

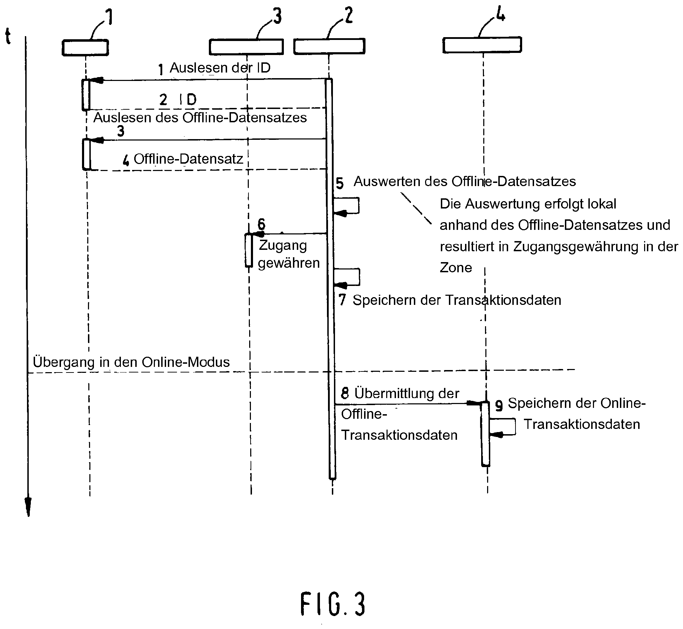

Für den Fall, dass ein Kundenmedium in einer Zone von einer online-Zugangskontrollvorrichtung bereits erfasst worden ist, wird bei einer erneuten Erfassung des Kundenmediums von einer Zugangskontrollvorrichtung in dieser Zone, wenn die Zugangskontrollvorrichtung offline ist, bezugnehmend auf Figur 3 wie folgt vorgegangen.

Zunächst wird die ID des Kundenmediums 1 von der Zugangskontrollvorrichtung 2 ausgelesen (Schritte 1 und 2), wobei anschließend der offline-Datensatz, der bei der ersten Erfassung des Kundenmediums 1 in derselben Zone auf das Kundenmedium 1 geschrieben worden ist, ausgelesen wird (Schritte 3, 4). In einem nächsten Schritt (Schritt 5) wird von der Zugangskontrollvorrichtung 2 der offline-Datensatz ausgewertet, wobei, wenn die Zonen-ID, die beim gezeigten Beispiel im offline-Datensatz enthalten ist, mit der Zonen-ID der Zugangskontrollvorrichtung 2 übereinstimmt und das Zeitintervall zwischen dem Schreiben des offline-Datensatzes (d.h. einem Zeitstempel) und dem Auslesen des offline-Datensatzes von der offline-Zugangskontrollvorrichtung 2 innerhalb der zeitlichen Gültigkeit der Zugangsberechtigung liegt, die bei dem gezeigten Beispiel im offline-Datensatz enthalten ist, der Zugang durch Betätigen des Sperrorgans 3 der Zugangskontrollvorrichtung 2 im Öffnungssinne gewährt wird (Schritt 6). Die Transaktionsdaten der offline-Zugangskontrolle werden lokal in der Zugangskontrollvorrichtung 2 gespeichert (Schritt 7), wobei, wenn zu einem späteren Zeitpunkt die Zugangskontrollvorrichtung 2 in den online-Modus übergeht, die Transaktionsdaten an den zentralen Server 4 übermittelt werden (Schritt 8), wo sie (Schritt 9) gespeichert werden.

## Patentansprüche

1. Verfahren zum Betreiben eines ID-basierten Zugangskontrollsystems umfassend zumindest einen zentralen Server (4) und zumindest eine mit dem zumindest einen zentralen Server (4) zum Zweck der Datenkommunikation verbindbare Zugangskontrollvorrichtung (2), wobei im normalen Betrieb des Zugangskontrollsystems die zumindest eine Zugangskontrollvorrichtung (2) mit dem zumindest einen zentralen Server (4) zum Zweck der Datenkommunikation verbunden ist, **dadurch gekennzeichnet, dass** jeder Zugangskontrollvorrichtung (2) eine Zone zugeordnet wird, die eine eineindeutige Zonen-ID aufweist, wobei, wenn ein Kundenmedium (1) zum ersten Mal hinsichtlich der Gültigkeit der Zugangsberechtigung in einer Zone von einer dieser Zone zugeordneten online Zugangskontrollvorrichtung (2) erfasst wird, ein offline-Datensatz auf das Kundenmedium (1) geschrieben wird, der für den Fall, dass eine Zugangskontrollvorrichtung (2) in derselben Zone offline ist und das Kundenmedium (1) erfasst, von der offline-Zugangskontrollvorrichtung (2) ausgelesen und zur Ermittlung der Gültigkeit einer der ID des Kundenmediums (1) zugeordneten Zugangsberechtigung herangezogen wird, wobei der offline Datensatz zeitliche Gültigkeitsinformationen und für den Fall, dass mehrere Zonen vorgesehen sind, zonenbezogene Gültigkeitsinformationen enthält, die es ermöglichen, die Gültigkeit einer der ID des Kundenmediums (1) zugeordneten Zugangsberechtigung zu ermitteln und wobei die Daten der offline-Zugangskontrolltransaktion von der Zugangskontrollvorrichtung (2) gespeichert und an den zentralen Server (4) weitergeleitet werden, sobald sich die Zugangskontrollvorrichtung (2) wieder im online-Modus befindet und dass wenn ein Kundenmedium (1) von einer online Zugangskontrollvorrichtung (2) in einer Zone erfasst wird, lediglich die ID des Kundenmediums (1) ausgelesen und an den zentralen Server (4) weitergeleitet wird, wobei der zentrale Server (4) mit der Information antwortet, ob für das Kundenmedium (1) eine gültige Zugangsberechtigung für diese Zone vorliegt und für den Fall, dass das Kundenmedium (1) zum ersten Mal in dieser Zone hinsichtlich der Gültigkeit der Zugangsberechtigung erfasst wird mit einem offline-Datensatz, der von der Zugangskontrollvorrichtung (2) auf das Kundenmedium (1) geschrieben werden soll, wobei wenn der offline-Datensatz erfolgreich auf das Kundenmedium (1) geschrieben worden ist, von der Zugangskontrollvorrichtung (2) eine entsprechende Information an den zentralen Server (4) übermittelt wird, wobei bei Zugangskontrollen desselben Kundenmediums (1) mittels online-Zugangskontrollvorrichtungen (2) in derselben Zone bei der Auswertung der Gültigkeit der Zugangsberechtigung anhand der ID des Kundenmediums (1) über den zentralen Server (4) kein offline-Datensatz an die jeweilige Zugangskontrollvorrichtung (2) übermittelt wird.

2. Verfahren zum Betreiben eines ID-basierten Zugangskontrollsystems nach Anspruch 1, **dadurch gekennzeichnet, dass**, wenn eine Zugangskontrollvorrichtung (2) ein Kundenmedium (1) zum ersten Mal hinsichtlich der Gültigkeit einer Zugangsberechtigung in der Zone, der sie zugeordnet ist, erfasst und offline ist, der Zugang gewährt wird, wobei die Gültigkeit des Kundenmediums (1) in derselben Zone von einer weiteren Zugangskontrollvorrichtung oder von derselben Zugangskontrollvorrichtung zu einem späteren Zeitpunkt im online-Modus überprüft werden kann.

3. Verfahren zum Betreiben eines ID-basierten Zugangskontrollsystems nach Anspruch 1 oder 2, **dadurch gekennzeichnet, dass** wenn das Kundenmedium (1) direkt in einer Zone gekauft wird, der offline-Datensatz zum Zeitpunkt des Kaufs des Kundenmediums (1) auf das Kundenmedium (1) geschrieben wird.

4. Verfahren zum Betreiben eines ID-basierten Zugangskontrollsystems nach Anspruch 1, 2 oder 3, **dadurch gekennzeichnet, dass** ein auf ein Kundenmedium (1) geschriebener offline-Datensatz zur Ermittlung der zu zahlenden Gebühren von einem Verkaufsautomaten des Zugangskontrollsystems herangezogen wird, wenn sich der Verkaufsautomat in einem offline-Status befindet, wobei von den Verkaufsautomaten des Zugangskontrollsystems die Preise und Tarife gespeichert werden, so dass anhand der gespeicherten Preise und Tarife und der Daten des offline-Datensatzes der zu zahlende Betrag ermittelt wird.

## Claims

1. Method to operate an ID-based access-control system comprising at least one central server (4) and at least one access-control device (2), which can be connected to at least one central server (4) for the purpose of data communication, wherein, during normal operation of the access-control system, the at least one access-control device (2) is connected to at least one central server (4) for the purpose of data communication, **characterized in that** one zone is assigned to each access-control device (2), which has an clear zone-ID, wherein, if a customer medium (1) is detected for the first time with regard to the validity of the access authorization within a zone of an online access-control device (2) assigned to this zone, an offline dataset is written onto the customer medium (1), which, in the case that an access-control device (2) is offline in the same zone and the it detects the customer medium (1), is read by the offline access-control device (2) and used to determine the validity of one access authorization assigned to the 10 belonging to the customer medium (1), wherein the offline dataset contains time validity information and, for the case that a plurality of zones are provided, zone-related validity information, which makes it possible to determine the validity of one access authorization assigned to 10 belonging to the customer medium (1) and wherein the data of the offline access-control transaction is saved by the access-control device (2) and passed on to the central server (4) as soon as the access-control device (2) is in online mode again and that when a customer medium (1) is detected by an online access-control device (2) in a zone, only the 10 belonging to the customer medium (1) are ready and passed on to the central server (4), wherein the central server (4) responds with the information concerning whether there is a valid access authorization for this zone for the customer medium (1) and, in the case that the customer medium (1) is detected for the first time in this zone with regard to the validity of the access authorization, with an offline dataset, which should be written onto the customer medium (1) by the access-control device (2), wherein if the offline data set has been successfully written onto the customer medium (1), the related information is transmitted to the central server (4) by the access-control device (2), wherein, in the case of access verifications of the same customer medium (1) by means of online access-control devices (2) in the same zone for the evaluation of the validity of the access authorization based on the ID of the customer (1) via the central server (4), no offline dataset is transmitted to the respective access-control device (2) .

2. Method to operate an ID-based access-control system according to Claim 1, **characterized in that**, if an access-control device (2) detects a customer medium (1) for the first time with regard to the validity of an access authorization in the zone, which it is assigned to and it is offline, access is permitted, wherein the validity of the customer medium (1) in the same zone of another access-control device or of the same access-control device can be checked at a later time in offline mode.

3. Method to operate an ID-based access-control system according to Claim 1 or 2, **characterized in that**, if the customer medium (1) is directly purchased in a zone, the offline dataset is written onto the customer medium (1) at the time of purchasing the customer medium (1).

4. Method to operate an ID-based access-control system according to Claims 1, 2 or 3, **characterized in that** an offline dataset written onto a customer medium (1) to determine the fees to be paid is used by a vending machine of the access-control system when the vending machine is in an offline state, wherein the prices and tariffs are saved by the vending machine of the access-control system so that the amount to be paid is determined based on the prices, tariffs and data of the offline dataset.

## Revendications

1. Procédé de fonctionnement d'un système de contrôle d'accès basé sur ID comprenant au moins un serveur central (4) et au moins un dispositif de contrôle d'accès pouvant être relié avec au moins un serveur central (4) à des fins de communication de données, dans lequel dans le cadre du fonctionnement normal du système de contrôle d'accès au moins un dispositif de contrôle d'accès (2) est relié avec au moins un serveur central (4) à des fins de communication de données, **caractérisé en ce que** une zone est coordonnée à chaque dispositif de contrôle d'accès (2), qui présente une ID de zone univoque, dans lequel, lorsque un support du client (1) est détecte pour la première fois en ce qui concerne la validité de l'autorisation d'accès dans une zone par un dispositif de contrôle d'accès (2) coordonné en ligne à cette zone, un jeu de données hors ligne est écrit sur le support du client (1), qui, dans le cas où un dispositif de contrôle d'accès (2) est hors-ligne dans la même zone et le support du client (1) est détecté, est lu par le dispositif de contrôle d'accès (2) hors-ligne et est extrait afin de déterminer la validité d'une autorisation d'accès coordonnée à l'ID de support du client (1), dans lequel le champ de données en ligne contient des informations de validité temporelle et, dans le cas où plusieurs zones sont prévues, des informations de validité se rapportant aux zones, qui permettent de déterminer la validité d'une autorisation d'accès coordonnée à l'ID du support du client (1) et dans lequel les données de la transaction de contrôle d'accès hors-ligne sont mémorisées par le dispositif de contrôle d'accès (2) et sont transmises au serveur central (4), dès que le dispositif de contrôle d'accès se trouve en mode hors ligne et **en ce que** lorsqu'un support du client (2) est détecté dans une zone par un dispositif de contrôle d'accès (2) en ligne, seule l'ID du support du client (1) est lue et est transmise au serveur central (4), dans lequel le serveur central répond avec l'information, si pour cette zone une autorisation d'accès valide est présente pour le support du client (1) et dans le cas où le support du client (1) est détecté pour la première fois dans cette zone en ce qui concerne la validité de l'autorisation d'accès avec un jeu de données hors ligne, qui est écrit par le dispositif de contrôle d'accès (2) sur le support du client (1), dans lequel lorsque le jeu de données en ligne a été écrit avec succès sur le support du client (1), une information correspondante est transmise au serveur central (4) par le dispositif de contrôle d'accès (2), dans lequel lors des contrôles d'accès du même support du client (1) au moyen de dispositifs de contrôle d'accès en ligne (2) dans la même zone lors de l'estimation de la validité de l'autorisation d'accès sur la base de l'ID du support du client (1), aucun jeu de données hors ligne n'est transmis par l'intermédiaire du serveur central (4) au dispositif de contrôle d'accès respectif (2).

2. Procédé de fonctionnement d'un système de contrôle d'accès basé sur ID selon la revendication 1, **caractérisé en ce que** lorsqu'un dispositif de contrôle d'accès (2) détecte un support du client (1) pour la première fois en ce qui concerne la validité d'une autorisation d'accès dans la zone qui lui est coordonnée, et se trouve hors ligne, l'accès est accordé, dans lequel la validité du support du client (1) peut être contrôlée dans la même zone par un contrôle d'accès supplémentaire par le même dispositif de contrôle d'accès à un point temporel ultérieur dans le mode en ligne.

3. Procédé de fonctionnement d'un système de contrôle d'accès basé sur ID selon la revendication 1 ou 2, **caractérisé en ce que** lorsque le support du client (1) est acheté directement dans une zone, le jeu de données hors-ligne est écrit au point temporel de l'achat du support du client (1) sur le support du client (1).

4. Procédé de fonctionnement d'un système de contrôle d'accès basé sur ID selon la revendication 1, 2 ou 3, **caractérisé en ce que** un jeu de données hors-ligne écrit sur le support du client (1) est extrait afin de déterminer les frais à payer par un distributeur automatique du système de contrôle d'accès, lorsque le distributeur automatique se trouve dans un statut hors ligne, dans lequel les prix et les tarifs sont mémorisés par les distributeurs automatiques du système de contrôle d' accès de sorte que le montant à payer soit déterminé sur la base des prix et tarifs mémorisés et des données du jeu de données hors ligne.
